# EUROPEAN PATENT APPLICATION

(11) **EP 4 480 348 A1**
(43) Date of publication of application: **25.12.2024**
(21) Application number: 23194367.1
(22) Date of filing: 30.08.2023
(51) Int. Cl.: A47C 27/06, A47C 27/07

(54) **ELASTIC MODULE AND ELASTIC MATTRESS**

(30) Priority: 20.06.2023 CN 202310734424
(71) Applicant: New-Tec Integration (Xiamen) Co., Ltd., Xiamen, Fujian 361100 (CN)
(72) Inventor: LENG, Luhao, Xiamen, 361100 (CN)
(74) Representative: Verscht, Thomas Kurt Albert

(57) **Abstract**

An elastic module (100) is provided. The elastic module (100) comprises multiple pre-compressed springs (1), the multiple pre-compressed springs (1) contact or are adjacent to each other, upper ends of the multiple pre-compressed springs are separated, middle parts of the multiple pre-compressed springs (1) comprise one or more connection members (20,40), and middle parts of side surfaces of a front row and a rear row of two adjacent rows of the multiple pre-compressed springs (1) are connected together. The one or more connection members (20,40) of the present disclosure have suitable heights to drive the one or more pre-compressed springs (1) to deform in a lateral direction. The upper ends of the one or more pre-compressed springs (1) are free to move without interference. Therefore, the upper ends of the one or more pre-compressed springs (1) are respectively independently forced. Unforced springs of the one or more pre-compressed springs (1) adjacent to the forced springs of the one or more pre-compressed springs (1) will not be moved away from the forced springs to prevent generation of a boundary cavity due to pulling of the one or more connection members (20,40), and the spring module (100), as a whole, is compact.

## Description

### RELATED APPLICATIONS

This application claims priority to Chinese patent application 202310734424.X, filed on June 20, 2023. Chinese patent application 202310734424.X is incorporated herein by reference.

### FIELD OF THE DISCLOSURE

The present disclosure relates to a connection structure for pre-compressed springs, and in particular relates to an elastic module connected by the connection structure.

### BACKGROUND OF THE DISCLOSURE

An elastic cushion made of existing springs presents an elasticity as a whole, springs adjacent to a forced part are all subjected to force, so that the elastic cushion can withstand a greater force. However, a spring bed with the elastic cushion cannot change following a change in a posture of a human body due to a mounting structure of the springs in the elastic cushion. The springs independently provide elasticity. However, upper ends of the springs are usually connected in the elastic cushion, so that the springs are subjected to force as a whole. Therefore, it is important that the springs are respectively independently forced while not separating from each other, so that the elastic cushion is synchronically deformed following the posture of the human body.

### BRIEF SUMMARY OF THE DISCLOSURE

The present disclosure provides an elastic module configured to be deformed following changes in pressure, and a boundary between forced springs and unforced springs in the elastic module will not be separated due to squeezing.

A first technical solution of the present disclosure is as follows.

An elastic module comprises multiple pre-compressed springs, the multiple pre-compressed springs contact or are adjacent to each other, upper ends of the multiple pre-compressed springs are separated, middle parts of the multiple pre-compressed springs comprise one or more connection members, and middle parts of side surfaces of a front row and a rear row of two adjacent rows of the multiple pre-compressed springs are connected together.

In a preferred embodiment, the one or more connection members drive the multiple pre-compressed springs to bend laterally.

In a preferred embodiment, heights of the one or more connection members are no less than 0.5 mm.

In a preferred embodiment, the multiple pre-compressed springs are multiple pre-compressed springs wrapped by flexible sleeves.

In a preferred embodiment, the flexible sleeves are cloth sleeves, mesh sleeves, or bands configured to tense two ends of the multiple pre-compressed springs.

In a preferred embodiment, the multiple pre-compressed springs are slim-waisted shapes. That is, upper and lower ends of the multiple pre-compressed springs are larger than middle parts of the multiple pre-compressed springs.

In a preferred embodiment, the multiple pre-compressed springs comprises first springs and second springs, diameters of the first springs are smaller than diameters of the second springs, the first springs and the second springs are staggered.

In a preferred embodiment, the second springs are slim-waisted shapes, and the first springs are shaped as waist drums.

In a preferred embodiment, connection seats of the one or more connection members are outer rings disposed on middle parts of the flexible sleeves, and the outer rings are loops of bands or the bands spaced apart. As an option, the connection seats are made of plastic or other materials.

In a preferred embodiment, the one or more connection members have quadrilateral shapes, and the one or more connection members are clamped to waists of the multiple pre-compressed springs.

In a preferred embodiment, the middle parts of the multiple pre-compressed springs are buckled to each other by the one or more connection members. As an option, two adjacent connection members of the one or more connection members are connected by a third member.

In a preferred embodiment, bottom parts of the multiple pre-compressed springs of the elastic module are disposed on a bottom plate or a flexible material.

A second technical solution of the present disclosure is as follows.

An elastic mattress comprises one or more the elastic modules, a plurality of the one or more the elastic modules are spliced together, or an outer periphery of the plurality of the elastic modules is encompassed by a band.

The middle parts of the one or more pre-compressed springs of the spring module of the present disclosure are connected together, and the upper ends of the one or more pre-compressed springs are free to move without interference. Therefore, the upper ends of the one or more pre-compressed springs are respectively independently forced. Unforced springs (i.e., springs to which force is not applied) of the one or more pre-compressed springs adjacent to the forced springs (i.e., springs to which force is applied) of the one or more pre-compressed springs will not be moved away from the forced springs to prevent generation of a boundary cavity due to pulling of the one or more connection members, and the spring module, as a whole, is compact. The one or more connection members of the present disclosure have suitable heights to drive the one or more pre-compressed springs to deform in a lateral direction and to extend following the application of the force. Structures of the one or more connection members are simple and easily connected.

### BRIEF DESCRIPTION OF THE DRAWINGS

Fig. 1 shows of a pre-compressed spring of Embodiment 1;
Fig. 2 shows an exploded view of the pre-compressed spring of Embodiment 1;
Fig. 3 shows an arrangement of a spring module ;
Fig. 4 shows a connection relationship of the pre-compressed spring;
Fig. 5 shows the spring module;
Fig. 6 shows an exploded view of a pre-compressed spring of Embodiment 2;
Fig. 7 shows a connection member of Embodiment 2;
Figs. 8A, 8B, and 8C show a process for using the connection member of Embodiment 2.
Fig. 9 shows an exploded view of a pre-compressed spring of Embodiment 3;
Fig. 10 shows a connection member of Embodiment 3;
Figs. 11A, 11B, and 11C show a process for using the connection member of Embodiment 3;
Fig. 12 shows a structure of Embodiment 4;
Fig. 13 shows a front view of Embodiment 5;
Fig. 14 shows a top view of Embodiment 5;
Fig. 15 shows a connection relationship of Embodiment 5;
Fig. 16 shows a front view of Embodiment 6;
Fig. 17 shows a top view of Embodiment 6;
Fig. 18 shows a connection relationship of Embodiment 6; and
Fig. 19 shows pre-compressed springs of Embodiment 1.

### DETAILED DESCRIPTION OF THE EMBODIMENTS

The technical solutions in Embodiments 1-6 of the present disclosure will be clearly and completely described below in combination with the accompanying drawings. It is obvious that Embodiments 1-6 are preferred embodiments of the present disclosure and should not be regarded as an exclusion of other embodiments. It is intended that the present disclosure cover all of the other embodiments based on the presently presented embodiments provided they are made without creative works by a person of ordinary skill in the art.

Orientational words in the claims, the specification, and the accompanying drawings of the present disclosure, unless otherwise specified, such as "height", "upper end", "top", "bottom", "inside", "outside", "upper", "lower", "front", "rear", etc. indicate orientations or positional relationships based on orientations or positional relationships shown in the accompanying drawings only to facilitate the description of the present disclosure and to simplify the description rather than indicating or implying that the device or the element referenced by the orientational words should have a particular orientation or be constructed and operated in the particular orientation, and therefore should not be considered as a limitation of the specific scope of the present disclosure.

### Embodiment 1

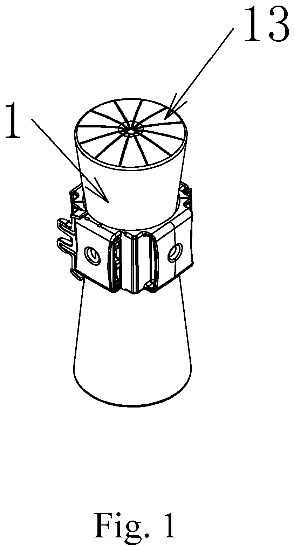

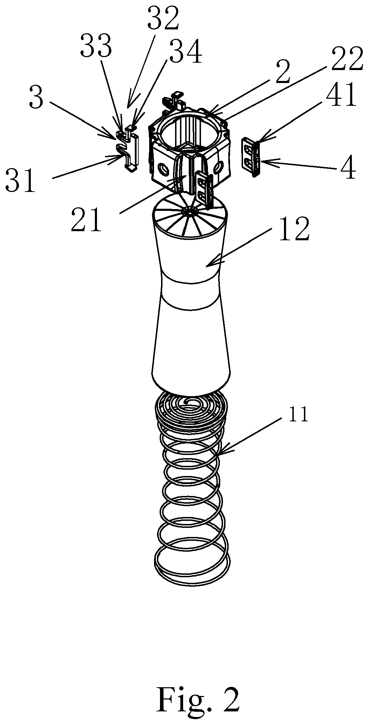

As shown in Figs. 1 and 2, one or more pre-compressed springs 1 comprise one or more springs 11 and one or more cloth sleeves 12. The one or more springs 11 are wrapped by the one or more cloth sleeves 12. After the one or more springs 11 are disposed in the one or more cloth sleeves 12, rear ends of the one or more cloth sleeves 12 are squeezed and tied to define knotted tops 13, and the knotted tops 13 are disposed in narrowed openings or top cover holes of the one or more pre-compressed springs 1. One or more connection members 20 are clamped to the waists of the one or more pre-compressed springs 1. The one or more connection members 20 comprise connection seats 2, front convex buckles 3, and rear concave buckles 4, and the connection seats 2 are disposed on waists of the one or more pre-compressed springs 1. Each of the connection seats 2 is an outer ring 22 disposed on a middle part of a corresponding one of the cloth sleeves 12, and the outer ring 22 is a loop of a band or bands spaced apart. At least two opposite sides of each of the connection seats 2 comprise slots 21. The front convex buckles 3 are fixed to front ends of the slots 21, and the rear concave buckles 4 are fixed to rear ends of the slots 21. Each of the front convex buckles 3 comprise two clamping tabs 31 spaced apart. At least one of the two clamping tabs 31 is hollow. At least one outside wall of the two clamping tabs 31 is a cantilevered arm 32. The two clamping tabs 31 comprise clamping structures 33, and a tail end of the cantilevered arm 32 is a platform 34. Each of the rear concave buckles 4 comprise two clamping holes 41 adapted to the two clamping tabs 31.

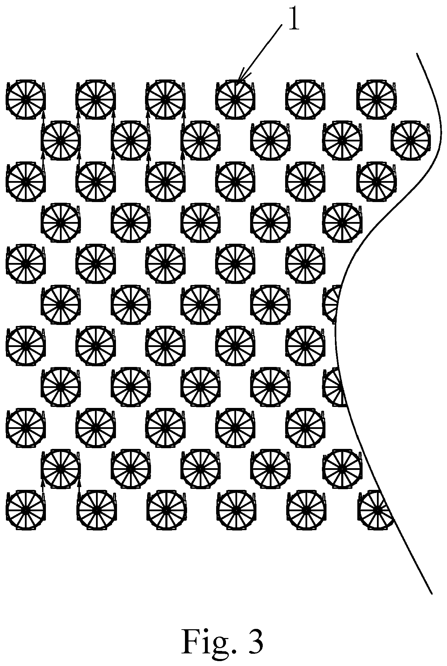

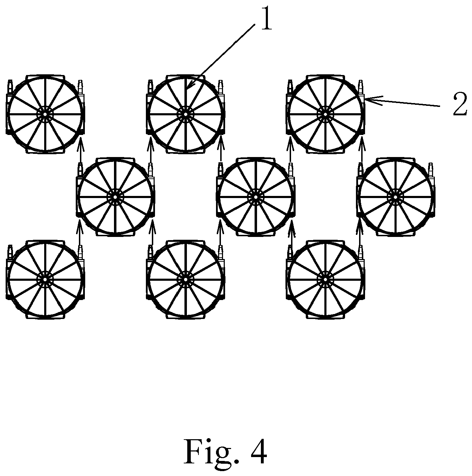

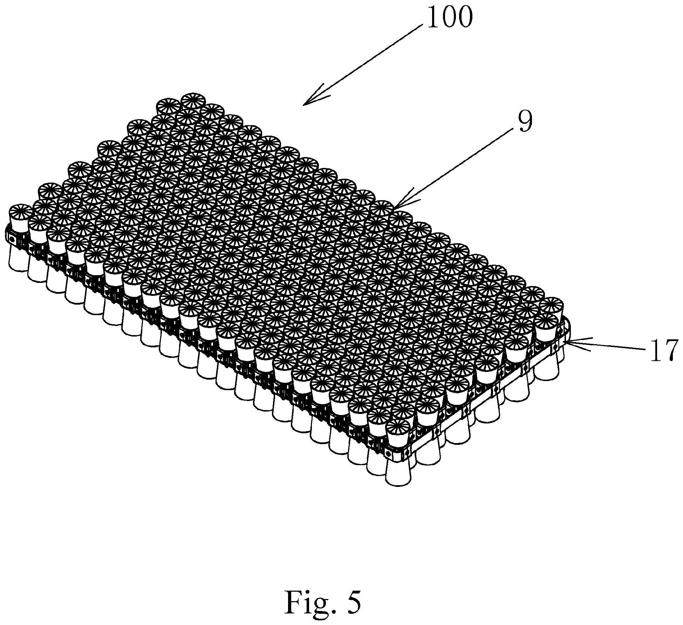

A connection between the one or more pre-compressed springs 1 is shown in Figs. 3-5. A waist (i.e., a middle part) of each of the one or more pre-compressed springs 1 comprise a corresponding one of the one or more connection members 20. Two adjacent rows (i.e., a front row and a rear row) of the one or more pre-compressed springs 1 are staggered, and the front convex buckles 3 of the one or more connection members 20 in the rear row of the one or more pre-compressed springs 1 are inserted into the rear concave buckles 4 in the front row of the one or more pre-compressed springs 1 to achieve a connection of the front row and the rear row of the one or more pre-compressed springs 1. The front convex buckles 3 can be detached from the rear concave buckles 4 by pushing the platform 34 of the front convex buckles 3 to be separated from the connection between the one or more pre-compressed springs 1.

Each of the connection seats 2, a corresponding one of the front convex buckles 3, and a corresponding one of the rear concave buckles 4 can be an integral structure or be separate elements and then connected together. Advantages of separation of each of the connection seats 2, the corresponding one of the front convex buckles 3, and the corresponding one of the rear concave buckles 4 are that different materials and different strengths can be selected.

Upper ends of the one or more pre-compressed springs 1 are separated (i.e., are not connected together).

In this embodiment, multiple pre-compressed springs of the one or more pre-compressed springs 1 define an elastic module (i.e., a spring module) 100.

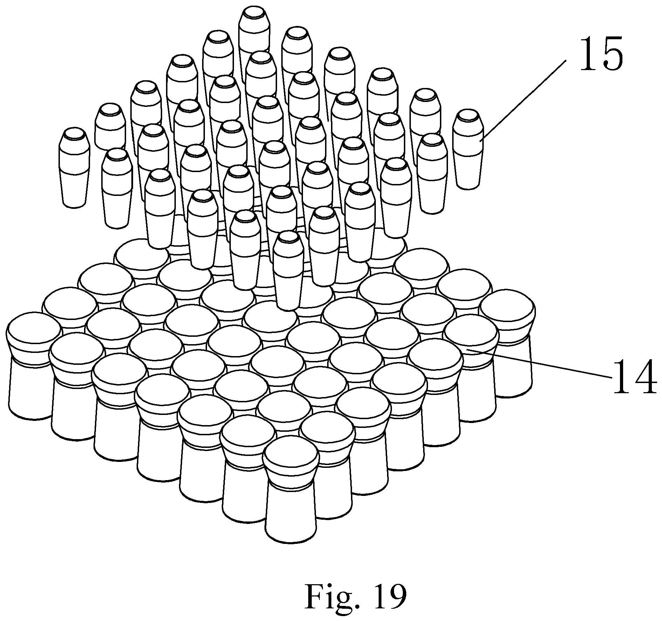

As an option, referring to Fig. 19, the springs comprises first springs 15 and second springs 14. Diameters of the first springs 15 are smaller than diameters of the second springs 14, and the first springs 15 and the second springs 14 are staggered. The second springs 14 have slim-waisted shapes, and the first springs 15 have waist drum shapes.

An elastic mattress comprises one or more the elastic modules 100, a plurality of the one or more the elastic modules 100 are spliced together, or an outer periphery of the plurality of the elastic modules 100 is encompassed by a band 17.

### Embodiment 2

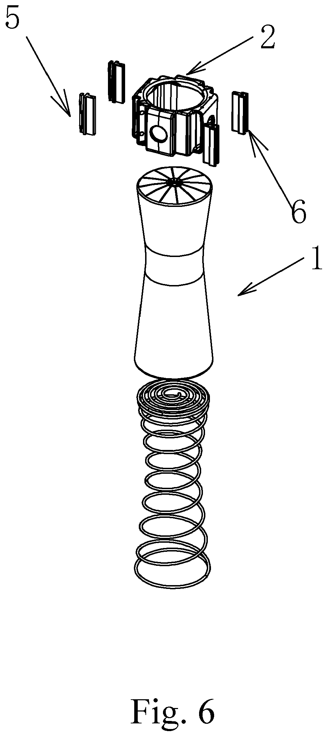

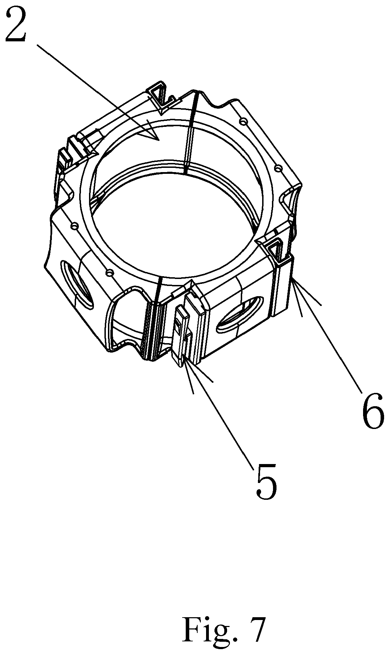

As shown in Figs. 6, 7, 8A, 8B, and 8C, the one or more pre-compressed springs 1 of Embodiment 2 is the same as the one or more pre-compressed springs 1 of Embodiment 1. Embodiment 2 differs from Embodiment 1 in that each of the one or more connection members 20 is a quadrilateral shape and comprises the connection seat 2, two projections 5, and two grooves 6. The connection seat 2 is a quadrilateral shape. The two projections 5 are fixed to two adjacent corners of the connection seat 2, and the two grooves 6 are fixed to another two corners of the connection seat 2.

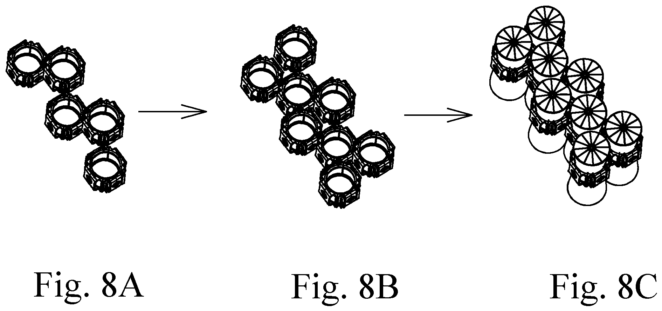

The connection between the one or more pre-compressed springs 1 is shown in Figs. 8A-8C. The waist of each of the one or more pre-compressed springs 1 comprises the corresponding one of the one or more connection members. The two adjacent rows (i.e., the front row and the rear row) of the one or more pre-compressed springs 1 are staggered, and the two projections 5 of each of the one or more connection members 20 of the rear row of the one or more pre-compressed springs 1 are inserted into the two grooves 6 of a corresponding one of the one or more connection members 20 of the front row of the one or more pre-compressed springs 1 to achieve the connection of the front row and the rear row of the one or more pre-compressed springs 1. The one or more connection members 20 are connected to present a same lateral height by setting the two grooves 6 and the two projections 5 at different heights. In this embodiment, the two projections 5 are T-shaped, and the two grooves 6 are straight. The two projections 5 are downwardly disposed in the two grooves 6 to achieve a stable connection by weights without a clamping structure.

### Embodiment 3

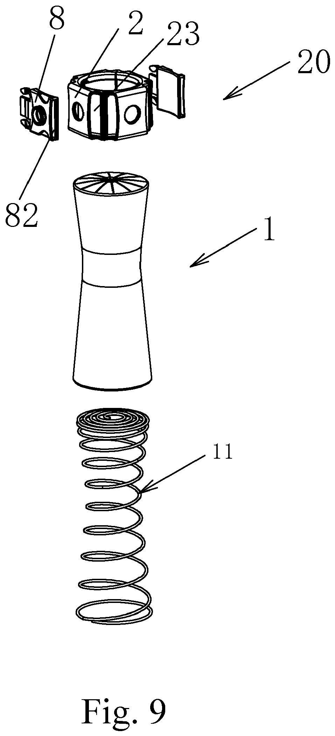

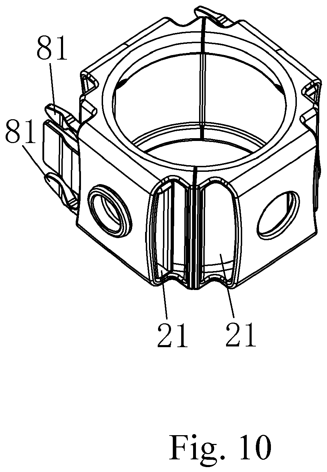

As shown in Figs. 9, 10, 11A, 11B, and 11C, the one or more pre-compressed springs 1 of Embodiment 3 is the same as the one or more pre-compressed springs 1 of Embodiment 1. Embodiment 3 differs from Embodiment 1 in that the one or more connection members 20 comprise the connection seats 2 and buckles 8. The connection seats 2 are disposed on the waists of the one or more pre-compressed springs 1, and the at least two opposing sides of the connection seats 2 comprise the slots 21. The buckles 8 are fixed to front ends of inner sides of the slots 21 of the connection seats 2. Front ends of the buckles 8 comprise upper and lower clamping tabs 81, and the upper and lower clamping tabs 81 are elastic. Rear ends of the buckles 8 can have clamping holes 82 configured to cooperate with the upper and lower clamping tabs 81. As another option, the buckles 8 are fixed to the inner sides of the slots 21, and rear ends of the slots 21 of the one or more connection members 20 have receiving spaces 23 for insertion of the clamping tabs 81.

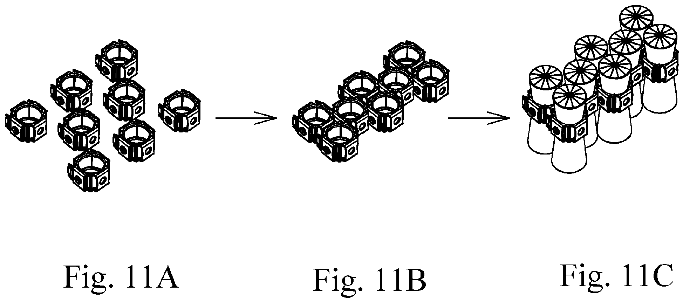

The connection between the one or more pre-compressed springs 1 is shown in Figs. 11A, 11B, and 11C. The waist of each of the one or more pre-compressed springs 1 comprise the corresponding one of the one or more connection members 20. The two adjacent rows (i.e., the front row and the rear row) of the one or more pre-compressed springs 1 are staggered, and the buckles 8 of the one or more connection members 20 in the rear row of the one or more pre-compressed springs 1 are inserted into the slots 21 of the connection seats 2 or the clamping holes 82 of the buckles 8 in the front row of the one or more pre-compressed springs 1 to achieve the connection of the front row and the rear row of the one or more pre-compressed springs 1.

### Embodiment 4

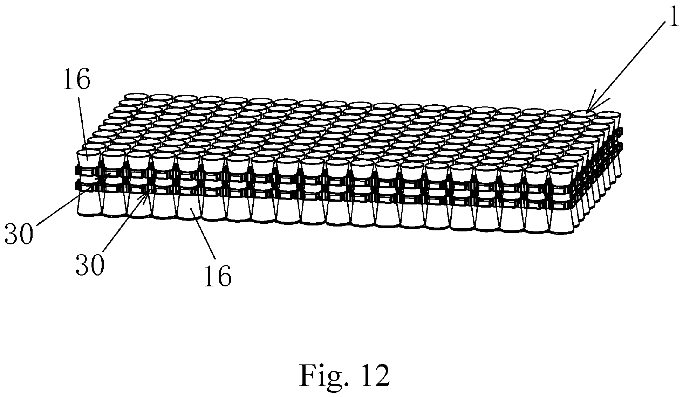

As shown in Fig. 12, Embodiment 4 differs from Embodiment 1 in that upper and lower pre-compressed springs 16 of the one or more pre-compressed springs 1 are connected each other by upper and lower connection members 30. The one or more pre-compressed springs 1 in Embodiment 4 are suitable for springs with larger heights, for example, springs with heights of more than 30 cm.

### Embodiment 5

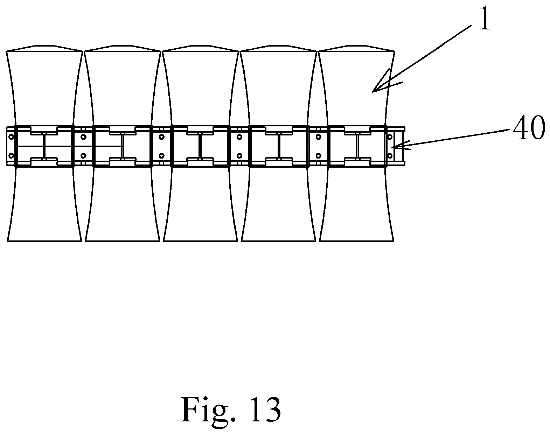

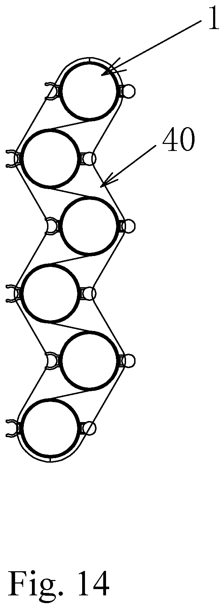

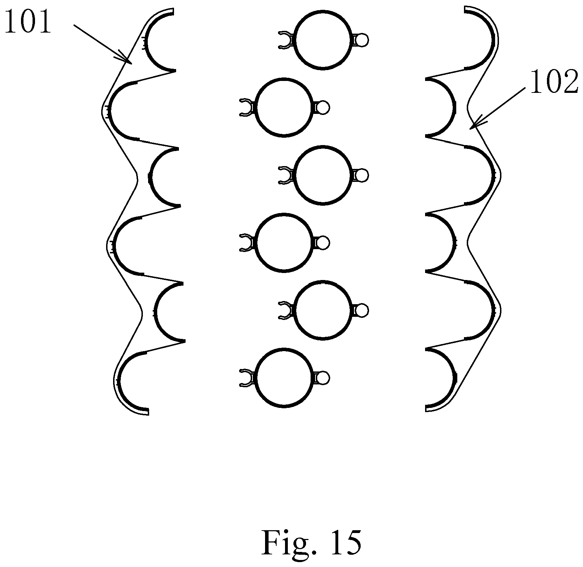

As shown in Figs. 13, 14, and 15, Embodiment 5 differs from Embodiment 1 in that the one or more connection members 40 of Embodiment 5 connects multiple pre-compressed springs of the one or more pre-compressed springs 1 together. Each of the one or more connection members 40 comprises two flaps 101 and 102. As another option, the one or more connection members 40 can comprise three flaps or four flaps. The multiple pre-compressed springs are buckled at corresponding positions of the one or more connection members 40 to connect waists of the multiple pre-compressed springs together, and the one or more connection members 10 can be odd shapes.

### Embodiment 6

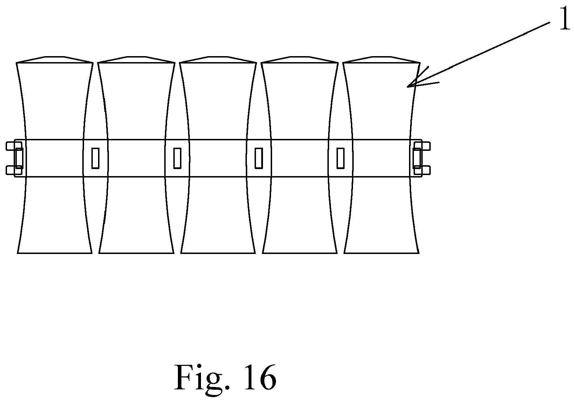

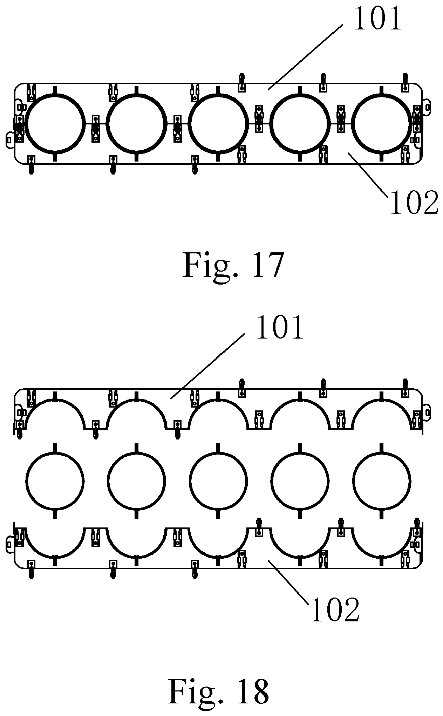

As shown in Figs. 16, 17, and 18, Embodiment 6 differs from Embodiment 1 in that the one or more connection members 40 of Embodiment 6 connect multiple pre-compressed springs of the one or more pre-compressed springs 1 together. Each of the one or more connection members 40 comprises two flaps 101 and 102. The multiple pre-compressed springs are clamped at corresponding positions of the one or more connection members 40 to connect waists of the multiple pre-compressed springs together, and the one or more pre-compressed springs are aligned with each other.

The invention may be summarized as follows: An elastic module is provided. The elastic module comprises multiple pre-compressed springs, the multiple pre-compressed springs contact or are adjacent to each other, upper ends of the multiple pre-compressed springs are separated, middle parts of the multiple pre-compressed springs comprise one or more connection members, and middle parts of side surfaces of a front row and a rear row of two adjacent rows of the multiple pre-compressed springs are connected together. The one or more connection members of the present disclosure have suitable heights to drive the one or more pre-compressed springs to deform in a lateral direction. The upper ends of the one or more pre-compressed springs are free to move without interference. Therefore, the upper ends of the one or more pre-compressed springs are respectively independently forced. Unforced springs of the one or more pre-compressed springs adjacent to the forced springs of the one or more pre-compressed springs will not be moved away from the forced springs to prevent generation of a boundary cavity due to pulling of the one or more connection members, and the spring module, as a whole, is compact.

The aforementioned description of the specification (including embodiments) is used to explain the scope of the present disclosure, and the scope of the disclosure is not limited thereto. Thus, it is intended that the scope of the present disclosure cover any modifications, equivalents, and improvements of the embodiments of the present disclosure and some technical features thereof provided they are made without departing from the appended claims and the specification of the present disclosure through logical analysis, reasoning, or limited experiments by combining common knowledge, ordinary technical knowledge and/or prior arts in the art by a person of ordinary skill in the art.

## Claims

1. An elastic module (100), it comprises:
multiple pre-compressed springs (1), **characterized in that**:
the multiple pre-compressed springs (1) contact or are adjacent to each other,
upper ends of the multiple pre-compressed springs (1) are separated,
middle parts of the multiple pre-compressed springs (1) comprise one or more connection members (20, 40), and
middle parts of side surfaces of a front row and a rear row of two adjacent rows of the multiple pre-compressed springs (1) are connected together.

2. The elastic module (100) according to claim 1, **characterized in that**: the one or more connection members (20, 40) drive the multiple pre-compressed springs (1) to bend laterally.

3. The elastic module (100) according to claim 1 and/or 2, **characterized in that**: the multiple pre-compressed springs (1) are multiple pre-compressed springs (11) wrapped by flexible sleeves (12).

4. The elastic module (100) according to claim 3, **characterized in that**:
the flexible sleeves (12) are cloth sleeves, mesh sleeves, or bands configured to tense two ends of the multiple pre-compressed springs.

5. The elastic module (100) according to any one or more of claims 1 to 4, **characterized in that**: the multiple pre-compressed springs (1) are slim-waisted shapes.

6. The elastic module (100) according to any one or more of claims 1 to 5, **characterized in that**:
the multiple pre-compressed springs (1) comprises first springs (15) and second springs (14),
diameters of the first springs (15) are smaller than diameters of the second springs (14), and
the first springs (15) and the second springs (14) are staggered.

7. The elastic module (100) according to any one or more of claims 3 to 6, **characterized in that**:
connection seats (2) of the one or more connection members (20, 40) are outer rings (22) disposed on middle parts of the flexible sleeves (12), and
the outer rings (22) are loops of bands or the bands spaced apart.

8. The elastic module (100) according to any one or more of claims 1 to 7, **characterized in that**:
the one or more connection members (20, 40) have quadrilateral shapes, and
the one or more connection members (20, 40) are clamped to waists of the multiple pre-compressed springs (1).

9. The elastic module (100) according to any one or more of claims 1 to 8, **characterized in that**: the middle parts of the multiple pre-compressed springs (1) are buckled to each other by the one or more connection members (20, 40).

10. The elastic module (100) according to claim 8 and/or 9, **characterized in that**:
the one or more connection members (20, 40) comprise connection seats (2), front convex buckles (3), and rear concave buckles (4),
the connection seats (2) are disposed on the waists of the multiple pre-compressed springs (1),
at least two opposite sides of each of the connection seats (2) comprise slots (21),
the front convex buckles (3) are fixed to front ends of the slots (21),
the rear concave buckles (4) are fixed to rear ends of the slots (21),
each of the front convex buckles (3) comprise two clamping tabs (31) spaced apart,
at least one of the two clamping tabs (31) is hollow,
at least one outside wall of the two clamping tabs (31) is a cantilevered arm,
the two clamping tabs (31) comprise clamping structures (33), and
each of the rear concave buckles (4) comprise two clamping holes (41) adapted to the two clamping tabs (31).

11. The elastic module (100) according to claim 10, **characterized in that**: each of the connection seats (2), a corresponding one of the front convex buckles (3), and a corresponding one of the rear concave buckles (4) define an integral structure in a corresponding one of the one or more connection members (20, 40).

12. The elastic module (100) according to any one or more of claims 1 to 11, **characterized in that**:
each of the one or more connection members (20, 40) comprises a connection seat (2), two projections (5), and two grooves (6),
the two projections (5) are fixed to two adjacent corners of the connection seat (2),
the two grooves (6) are fixed to another two corners of the connection seat (2),
a front row and a rear row of the two adjacent rows of the multiple pre-compressed springs (1) are staggered, and
the two projections (5) of each of the one or more connection members (20, 40) in the rear row of the multiple pre-compressed springs (1) are disposed in the two grooves (6) of a corresponding one of the one or more connection members (20, 40) in the front row of the multiple pre-compressed springs (1) to achieve a connection of the front row and the rear row of the multiple pre-compressed springs (1).

13. The elastic module (100) according to any one or more of claims 8 to 12, **characterized in that**:
the one or more connection members (20, 40) comprise connection seats (2) and buckles (8),
the connection seats (2) are disposed on the waists of the multiple pre-compressed springs (1),
at least two opposing sides of the connection seats (2) comprise slots (21),
the buckles (8) are fixed to front ends of inner sides of the slots (21) of the connection seats (2),
front ends of the buckles (8) comprise upper and lower clamping tabs (81),
the upper and lower clamping tabs (81) are elastic,
a front row and a rear row of the two adjacent rows of the multiple pre-compressed springs (1) are staggered, and
the buckles (8) of the one or more connection members (20, 40) in the rear row of the multiple pre-compressed springs (1) are disposed in the slots (21) of the connection seats (2) or clamping holes (82) of the buckles (8) in the front row of the multiple pre-compressed springs (1) to achieve a connection of the front row and the rear row of the multiple pre-compressed springs (1).

14. The elastic module (100) according to any one or more of claims 1 to 13, **characterized in that**: upper and lower pre-compressed springs (16) of the multiple pre-compressed springs (1) are connected to each other by upper and lower connection members (30) of the one or more connection members (20, 40).

15. The elastic module (100) according to any one or more of claims 1 to 14, **characterized in that**:
each of the one or more connection members (20, 40) comprises no less than two flaps (101, 102), and
the multiple pre-compressed springs (1) are clamped at corresponding positions of the one or more connection members (20, 40) to connect waists of the multiple pre-compressed springs (1) together.

16. An elastic mattress, it comprises:
one or more the elastic modules (100), in particular according to any one or more of claims 1 to 15, **characterized in that**:
a plurality of the one or more the elastic modules (100) are spliced together, or
an outer periphery of the plurality of the elastic modules (100) is encompassed by a band (17).
